# EUROPEAN PATENT SPECIFICATION

(11) **EP 1 535 791 B1**
(45) Date of publication and mention of the grant of the patent: **27.02.2008**
(21) Application number: 04027471.4
(22) Date of filing: 19.11.2004
(51) Int. Cl.: B60M 3/04, H01H 3/30

(54) **Device for actuating on-load disconnectors for power lines, particularly for railroad power lines**
Vorrichtung zur Betätigung von Lasttrennschaltern für Stromversorgungsleitungen, insbesondere für Bahnstromversorgung
Dispositif pour actionner des sectionneurs de puissance pour lignes électriques, en particulier pour l'alimentation de chemin de fer électrique

(30) Priority: 26.11.2003 IT MI20032310
(43) Date of publication of application: 01.06.2005
(73) Proprietor: Pfisterer S.r.l., 20017 Passirana di Rho (Prov. of Milano) (IT)
(72) Inventor: Nannini, Osvaldo, 20146 Milano (IT)
(74) Representative: Modiano, Micaela Nadia

(56) References cited:
- CN-A- 1 122 760
- US-A- 4 162 385

## Description

The present invention relates to a device for actuating on-load disconnectors for power lines, particularly for railroad power lines.

On-load or live disconnectors for railroad power lines are known.

A type of such disconnectors is substantially composed of a fixed contact, which is supported by a supporting structure and is electrically connected to a first power line, and by a moving contact which is electrically connected to a second power line to be connected and disconnected with respect to the first line. The moving contact is actuated by a lever so that it can be engaged with the fixed contact in order to provide the closed position of the disconnector, in which the two lines are electrically connected to each other, or be disengaged from the fixed contact in order to provide the open position of the disconnector, in which the electrical connection between the two lines is interrupted. Such disconnector is provided with two spark-gap electrodes, which quench the electric arc generated during the disengagement of the moving contact from the fixed contact.

Another known type of disconnector is substantially composed of two fixed contacts, which are supported by a supporting structure and are electrically connected respectively to a first power line and to a second power line to be connected or disconnected with respect to each other, and a moving contact which can engage the fixed contacts so as to provide their electrical connection (closed position of the disconnector) or can be disengaged in order to interrupt the electrical connection (open position of the disconnector). This kind of disconnector is generally equipped, for each fixed contact, with two spark-gap electrodes connected respectively to the fixed contact and to the moving contact in order to quench the electric arc generated during disengagement of the moving contact from the fixed contacts.

In known types of disconnector, actuation of the moving contact in order to open and close the disconnector is performed by means of devices that are usually located on the ground and are connected to the moving contact, which is arranged at a higher level, by means of very complicated connecting linkages, which in order to ensure the required reliability must be subjected to frequent maintenance, affecting significantly the operating costs.

Moreover, in many cases it is necessary to increase the speed of the opening and closing operations and to render the speed of such operations independent of the skill of the operator. For this reason, the devices currently in use employ various refinements, such as for example counterweights in order to assist the opening of the disconnector, but such refinements are often insufficient to achieve speeds that avoid damage to the disconnector, particularly during opening.

The aim of the present invention is to solve the problems noted above by providing a device for actuating on-load disconnectors for power lines, particularly railroad power lines, that allows to obtain disconnector opening and closing speeds that significantly reduce the damage and wear of the disconnector during these operations with respect to what can be obtained with conventional devices.

Within this aim, an object of the invention is to provide a device whereby the opening and closing speed of the disconnector becomes independent of the skill of the operator.

Another object of the invention is to provide a device that is structurally simple and has excellent reliability, so as to significantly reduce or even eliminate the need for periodic maintenance.

Another object of the invention is to provide a device that can be operated remotely and can be installed in an elevated position.

This aim and these and other objects that will become better apparent hereinafter are achieved according to the present invention by a device for actuating on-load disconnectors for power lines, particularly for railroad power lines, as described in claim 1.

Further characteristics and advantages of the invention will become better apparent from the description of a preferred but not exclusive embodiment of the device according to the invention, illustrated by way of non-limiting example in the accompanying drawings, wherein:
Figure 1 is a perspective view of a disconnector actuated by the device according to the invention, in the open position;
Figure 2 is a perspective view of the disconnector of Figure 1, taken from a different angle, in the closed position;
Figures 3 to 8 are perspective views of an operating cycle of the device according to the invention, and more particularly:

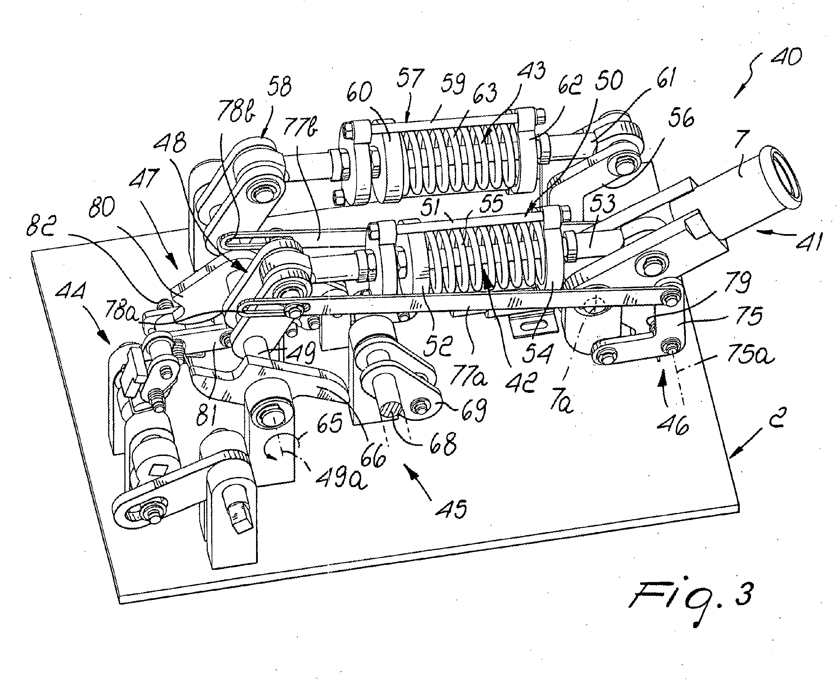

Figure 3 is a perspective view of the device according to the invention, with the moving element in the first position, which corresponds to the open position of the disconnector;

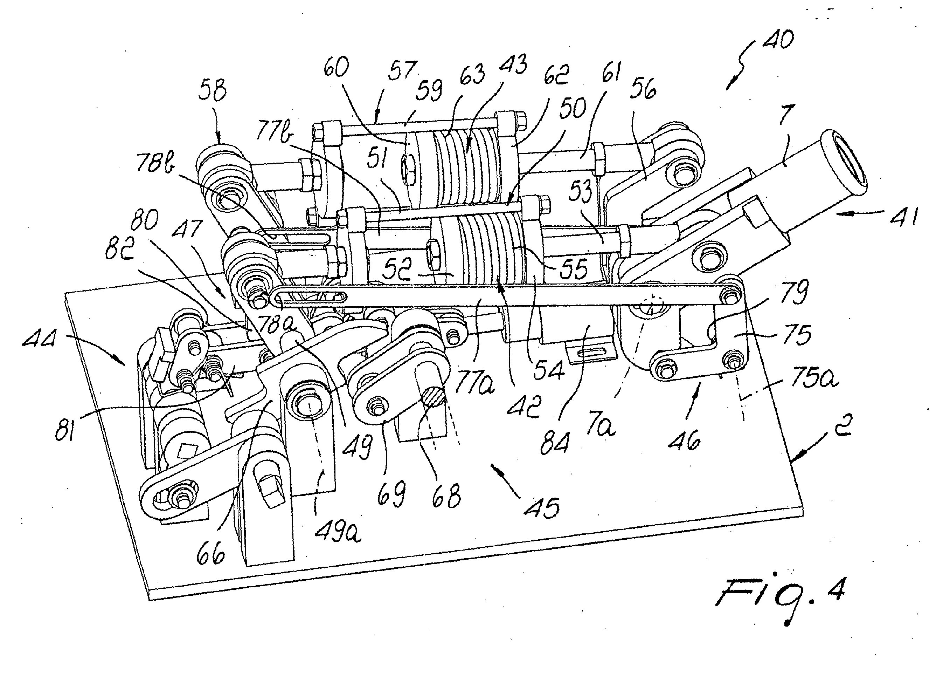

Figure 4 is a perspective view of the device according to the invention at the end of the loading of the elastic means;

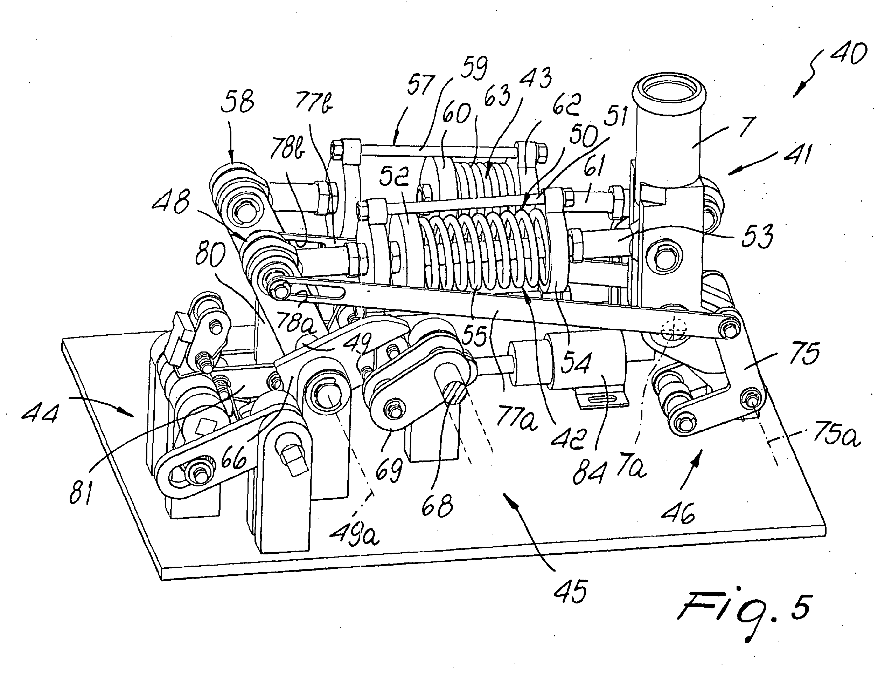

Figure 5 is a perspective view of the device according to the invention, with the moving element in the second position, which corresponds to the closed position of the disconnector;

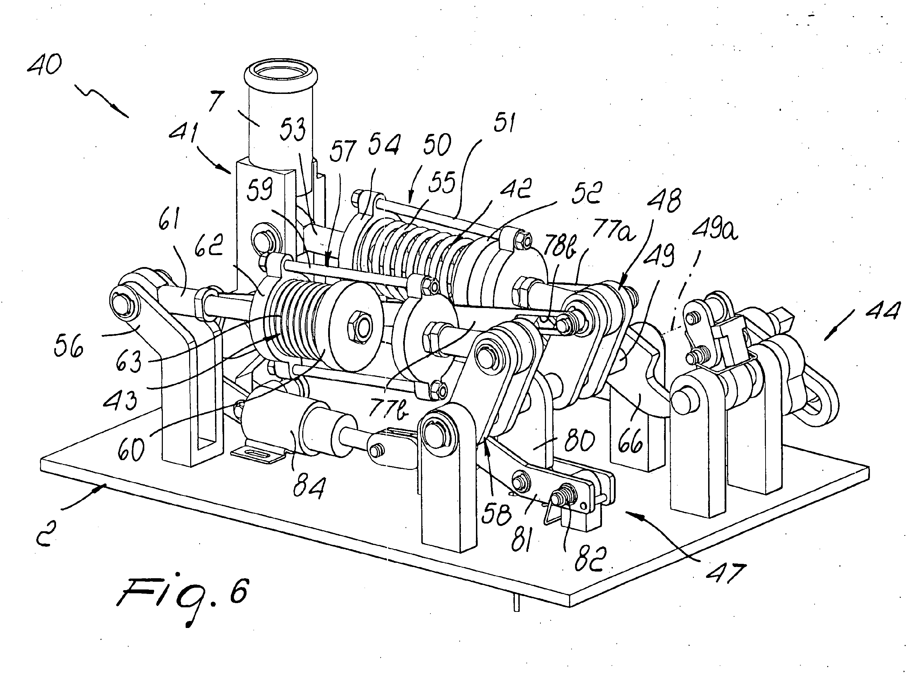

Figure 6 is a perspective view of the device according to the invention, in the same position as Figure 5, but from a different angle;

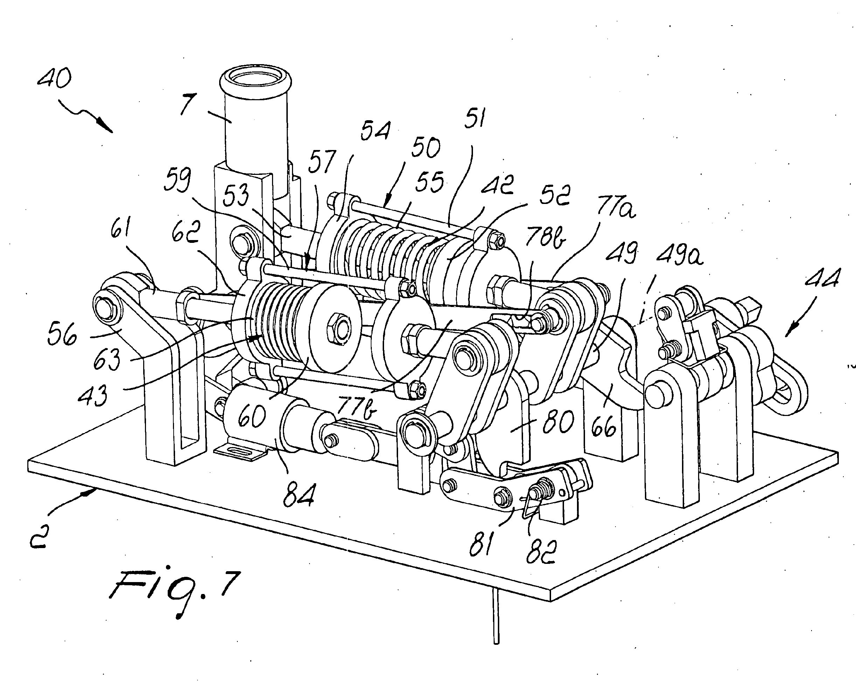

Figure 7 is a perspective view of the device according to the invention, similar to Figure 6, at the beginning of the transfer of the moving element from the second position to the first position;

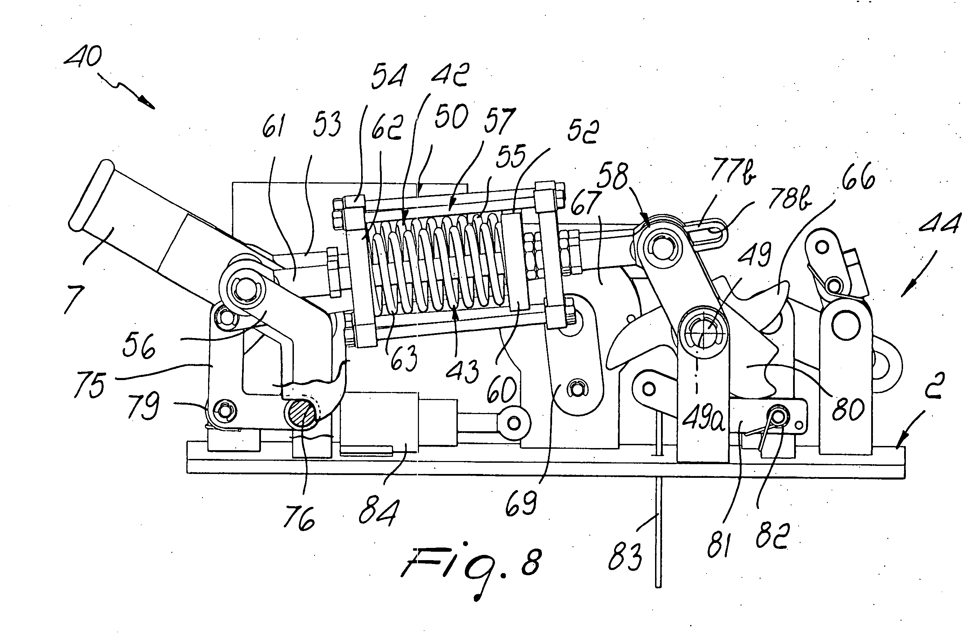

Figure 8 is a side elevation view of the device according to the invention, with the moving element in the first position;

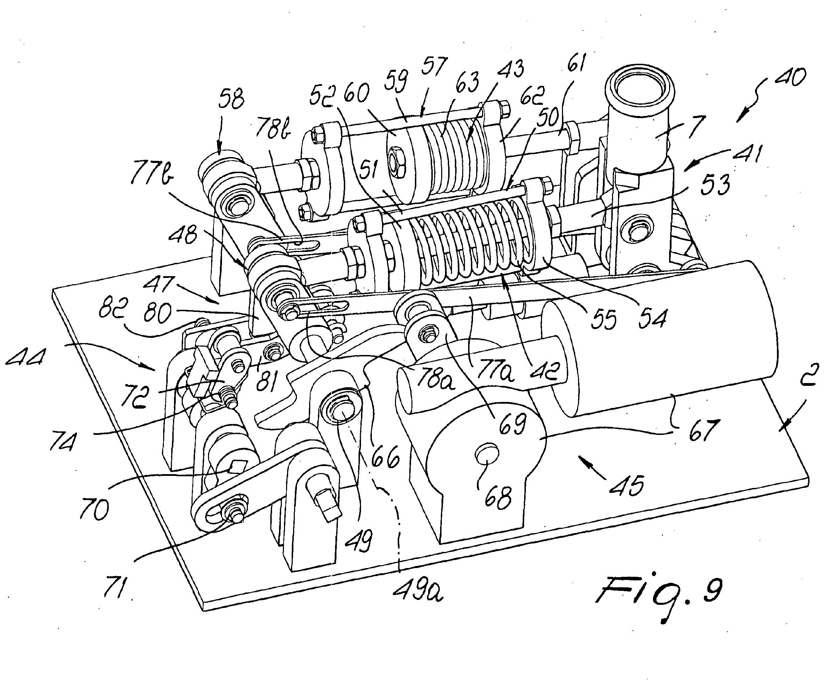

Figure 9 is a perspective view of the device according to the invention, illustrating in particular a first type of loading means;

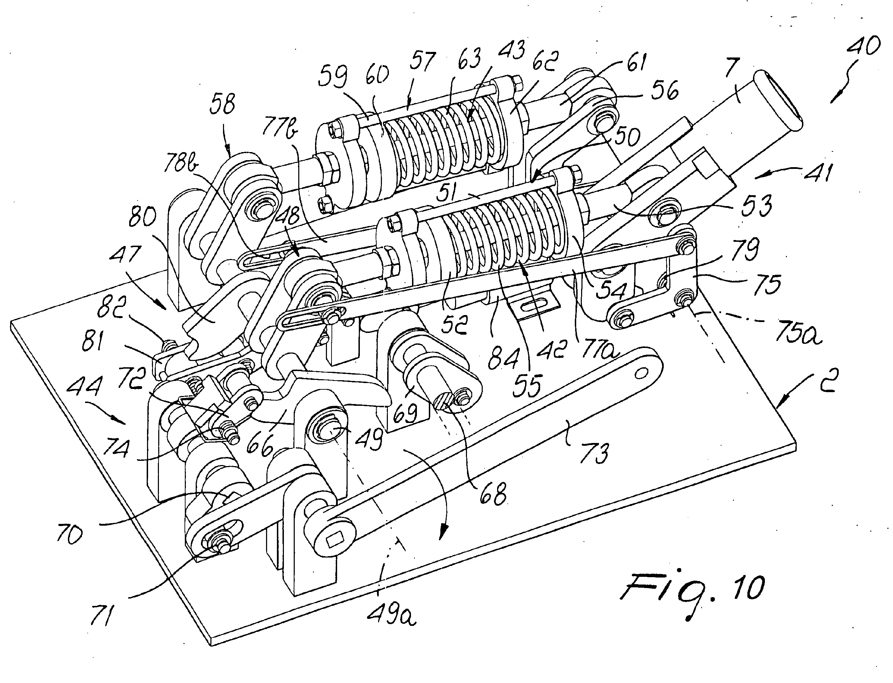

Figures 10 to 12 are perspective views of the device according to the invention, illustrating in particular a second type of loading means.

In some figures, which illustrate the device according to the invention, elements that have been shown in other figures have been omitted for the sake of greater clarity in presentation.

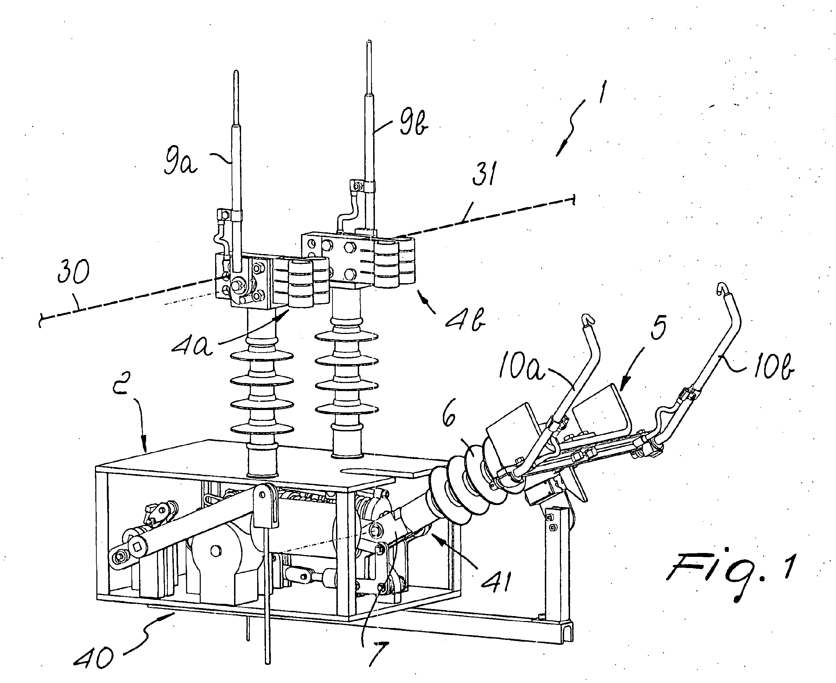

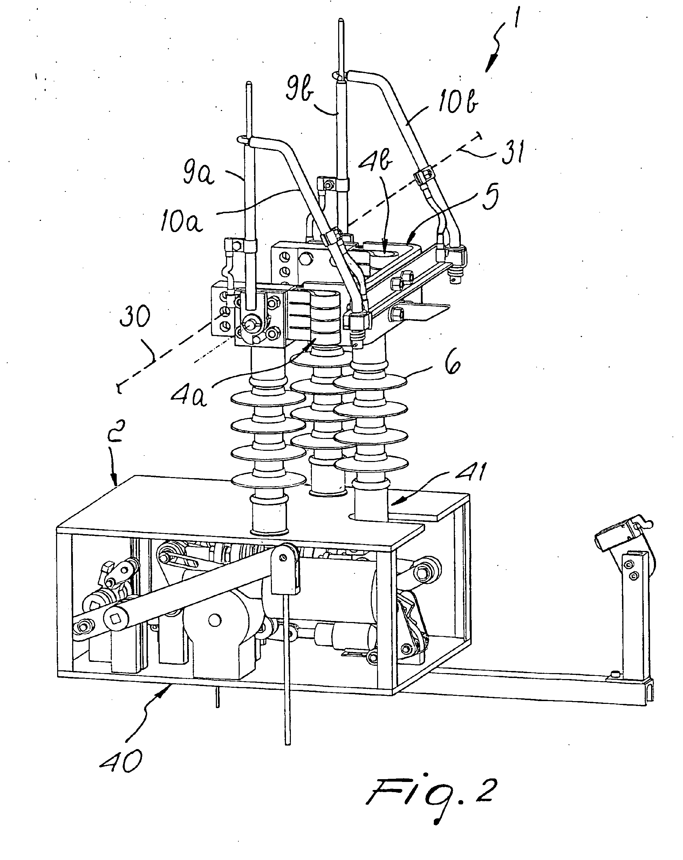

With reference to the figures, the device according to the invention, generally designated by the reference numeral 40, is designed to be used to actuate on-load or live disconnectors for power lines, particularly for railroad power lines. In Figures 1 and 2, the device is shown in its application for the actuation of a disconnector 1 that is disclosed in a copending patent application by the same Applicant, which is assumed included herein by reference. The device according to the invention may be used in any case to actuate other types of disconnector without thereby abandoning the scope of the protection of the present invention.

The disconnector that must be operated by means of the device according to the invention is provided with one or more fixed contacts 4a, 4b, which are connected to respective power lines 30, 31, and with at least one moving contact 5, which upon its own movement can engage or disengage the fixed contact or contacts 4a, 4b. The power lines 30, 31 to be connected to each other by means of the disconnector may be connected exclusively to the fixed contacts 4a, 4b; in this case, the moving contact 5 can be actuated in order to simply connect the fixed contacts 4a, 4b, as shown.

As an alternative, the power lines to be connected to each other may be connected respectively so that one is connected to a fixed contact and one is connected to the moving contact. In this case, the disconnector may also have a single fixed contact and a single moving contact.

The disconnector 1 is provided with spark-gap electrodes 9a, 9b, 10a, 10b, which are electrically connected to the fixed contacts 4a, 4b in order to quench the electric arc during the opening of the disconnector.

The device according to the invention comprises a moving element 41, which can be associated with the moving contact 5 of the disconnector to be actuated; the moving element 41 can be moved from a first position to a second position, which correspond to the open position and to the closed position of the disconnector, or vice versa.

According to the invention, the device comprises first elastic means 42, which are connected to the moving element 41 and are adapted to act on the moving element 41 in order to transfer it from the first position to the second position, and second elastic means 43, which are also connected to the moving element 41 and are adapted to act on the moving element 41 in order to transfer it from the second position to the first position. The device according to the invention further comprises means 44, 45 for loading the elastic means 42, 43 and means 46, 47 for retaining the moving element 41 in the first position and in the second position in contrast with the action of the elastic means 42, 43, which are being loaded or are already loaded. The retention means 46, 47 can be deactivated in order to allow the moving element 41 to pass from the first position to the second position and vice versa by virtue of the elastic reaction of the elastic means 42, 43, as will become better apparent hereinafter.

More particularly, the moving element 41 is constituted by an opening-closing lever 7, which is pivoted, proximate to one of its ends, to the supporting structure 2 of the device about a main axis 7a and supports, at the opposite end, an isolator 6 that supports the moving contact 5.

The opening-closing lever 7 is connected, by means of one of its portions, to a first crank 48 of a main shaft 49, which is supported by the supporting structure 2 so that it can rotate about its own axis 49a, which is parallel to the main axis 7a. The connection between the opening-closing lever 7 and the first crank 48 is provided by means of a first linkage 50, whose length can be increased in contrast with the first elastic means 42.

The first linkage 50 is preferably provided so that an increase in its length compresses the first elastic means 42, which in this manner act by compression. More particularly, as shown, the end of a first linkage 50 that is connected to the first crank 48 is fixed to a cage 51, in which a piston or disk 52 slides, said piston or disk being fixed to a stem 53 that forms the other end of the first linkage 50. The cage 51 has a wall 54 that faces the piston or disk 52 and is crossed by the stem 53. The first elastic means 42 are preferably constituted by a helical spring 55, which is interposed, so that it is appropriately preloaded, between the wall 54 and the piston 52. In this manner, an elongation of the first linkage 50 compresses and therefore loads the spring 55.

Moreover, the main shaft 49 is connected to the supporting structure 2, or rather to a pair of shoulders 56, which are fixed to the supporting structure 2 by means of a second linkage 57. The main shaft 49 is provided with a second crank 58, which is connected to the pair of shoulders 56 by means of the second linkage 57, which like the first linkage 50 has a length that can be increased in contrast with the action of the second elastic means 43. More particularly, the second linkage 57 is preferably provided so that an increase in its length compresses the second elastic means 43, which in this manner act by compression. In greater detail, as shown, the end of the second linkage 57 that is connected to the second crank 58 is fixed to a cage 59, in which a piston or disk 60 slides; said piston or disk is fixed to a stem 61, which forms the other end of the second linkage 57. The cage 59 has a wall 62 that faces the piston or disk 60 and is crossed by the stem 61. The second elastic means 43 are preferably constituted by a helical spring 63, which is interposed, so as to be appropriately preloaded, between the wall 62 and the piston 60. In this manner, an elongation of the second linkage 57 produces a compression and therefore a loading of the spring 63.

It should be noted that the linkages 50 and 57 may be substantially parallel and side by side.

The means for loading the elastic means 42, 43 are simply adapted to produce a rotation, through an arc of preset breadth, of the main shaft 49 about its own axis 49a with respect to the supporting structure 2, in the direction of rotation 65 (counterclockwise with reference to Figure 3), which causes an elongation of the linkages 50 and 57 when the opening-closing lever 7 is in the first position (open position of the disconnector).

Said loading means can be any of the manually-operated type 44 and/or of the motorized type 45. The figures illustrate an embodiment of the device that is provided with both types of actuation. In greater detail, with particular reference to Figures 9 to 12, a double cam 66 is fixed in a region of the main shaft 49. As regards the motorized loading means 45, the supporting structure 2 supports, laterally to the main shaft 49, a gearmotor 67, which is provided with an output shaft 68, the axis whereof is parallel to the axis 49a of the main shaft 49 and is provided with a crank 69, which upon rotation of the output shaft 68 can act on the double cam 66 in order to turn the main shaft 49 in the direction of rotation that loads the elastic means 42 and 43.

As regards the manually-operated loading means 44, an auxiliary shaft 70 is arranged laterally to the main shaft 49, on the opposite side with respect to the gearmotor 67, and is supported by the supporting structure 2 so that it can rotate about its own axis, which is parallel to the axis 49a. Said auxiliary shaft 70 has, along its extension, two cranks, respectively a fixed crank 71 and an articulated crank 72.

The fixed crank 71 is connected to an actuation lever 73, on which it is possible to act manually in order to turn the auxiliary shaft 70 in both directions of rotation.

The crank 72 is articulated so as to engage the double cam 66 exclusively in the direction of rotation of the auxiliary shaft 70 that turns the main shaft 49 that actuates the loading of the elastic means 42, 43. In the rotation of the auxiliary shaft 70 in the opposite direction, the crank 72 yields, in contrast with a return spring 74, in order to move without any effect beyond the double cam 66. The return spring 74 returns the crank 72, as soon as it has moved backwardly beyond the double cam 66, to a position that is adapted to engage the double cam 66 during the subsequent rotation of the auxiliary shaft 70 in the opposite direction, i.e., in the direction that loads the elastic means 42 and 43.

The retention means comprise first retention means 46 and second retention means 47.

The first retention means 46 engage the opening-closing lever 7 in order to retain it in the first position during the rotation of the main shaft 49 that loads the elastic means 42, 43. More particularly, the first retention means comprise a lever or rather a double lever 75, which is pivoted to the supporting structure by means of an intermediate portion about an axis 75a that is parallel to the main axis 7a.

The double lever 75 can engage, by means of one of its ends, a portion 76 (shown in Figure 8) of the opening-closing lever 7, when said lever is in the first position, so as to prevent it from rotating about the axis 7a to reach the second position. Moreover, the double lever 75 is connected, at its opposite end with respect to the end that engages the opening-closing lever 7, by means of connecting levers 77a, 77b, to a region of the main shaft 49 that is conveniently constituted by the pivot that connects the first linkage 50 to the first crank 48. The connecting levers 77a, 77b are coupled to said pivot by means of slots 78a, 78b, which allow the main shaft 49 to rotate about its own axis 49a without affecting the double lever 75 through an arc that has a preset breadth. The action of the main shaft 49 that is transmitted to the double lever 75 by means of the connecting levers 77a, 77b turns the double lever 75 about the axis 75a in the direction of rotation that disengages said double lever 75 from the opening-closing lever 7. This rotation of the double lever 75 is contrasted by springs 79.

The second retention means 47 comprise a locking cam 80, which is fixed to the main shaft 49 and can be engaged by a locking lever 81, which is supported by the supporting structure 2. The locking lever 81 is supported so as to engage the locking cam 80 by a return spring 82, when the locking cam 80, upon rotation of the main shaft 49, is at the end of the rotation arc that loads the elastic means 42, 43. The locking lever 81 can be disengaged from the locking cam 80 by means of another lever 83 or by means of an actuator 84, for example of the electromagnetic type, that can be remotely operated.

The disconnector is conveniently provided with means for detecting the open position and the closed position of the disconnector, which can interact with the actuation device according to the invention particularly as regards the motorized loading means 45.

Preferably, the supporting structure 2 comprises a box-like structure that supports the opening-closing lever 7 and accommodates the main shaft 49, the elastic means 42, 43, the loading means 44, 45, and the retention means 46, 47 described above. Said box-like structure, in this case of disconnectors for overhead power lines, is designed to be arranged on a pole or other elevated structure, and the device can be remotely actuated by means of extremely simple electrical or mechanical connections. It should be noted, for example, that apart from the manual actuation of the loading means 44 that can be used in case of emergency, the device according to the invention can be driven simply by means of an electric control that actuates the gearmotor 67 and by means of an electric or mechanical control that disengages the locking lever 81 from the locking cam 80.

Operation of the device according to the invention is as follows.

Starting from the position shown in Figures 1 and 3, in which the disconnector is in the open position with the opening-closing lever 7 locked in the first position by the double lever 75 and with the springs 55 and 63 unloaded, except for assembly preloading, if the disconnector is to be closed one activates the manually-actuated loading means 44 or the motorized loading means 45.

If the manually-actuated loading means 44 are used, one acts on the actuation lever 73 so as to turn the auxiliary shaft 70 about its own axis, (clockwise in Figure 10, which refers to this step of operation). The rotation of the auxiliary shaft 70 engages the crank 72 with the double cam 66 and turns the main shaft 49 about the axis 49a (counterclockwise in Figure 10), until the locking cam 80 is engaged by the locking lever 81.

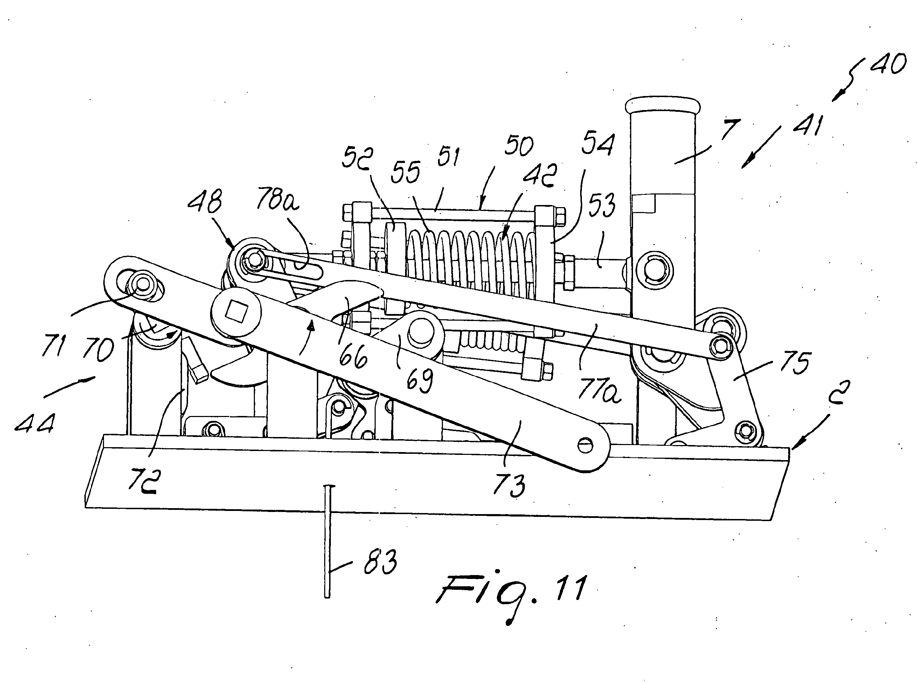

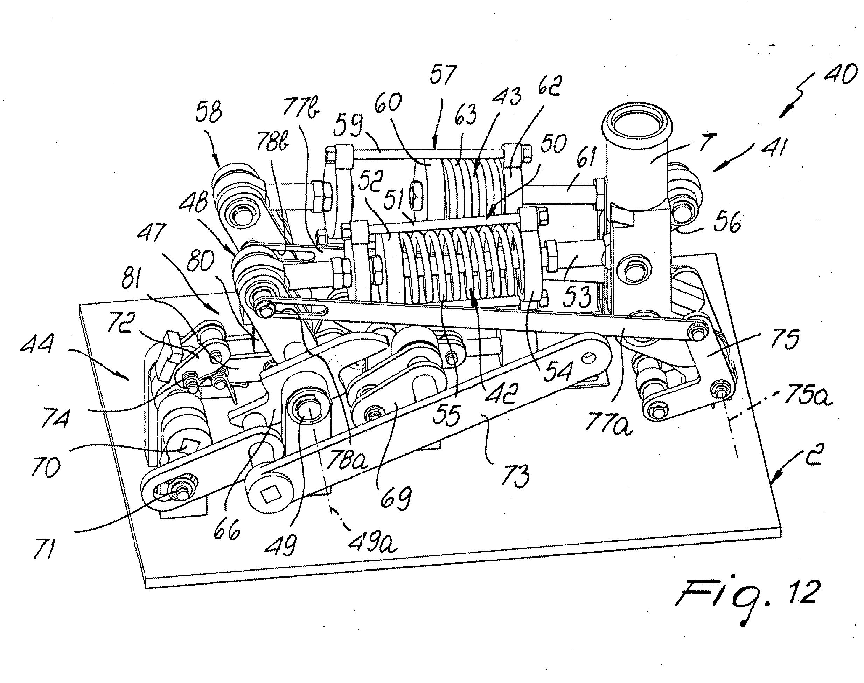

After this has occurred, the lever 73 can be turned in the opposite direction in order to preset said lever 73 so that it waits for a new actuation. The rotation of the lever 73 in the opposite direction produces the rotation in the opposite direction (counterclockwise in Figure 11, which refers to this step of operation), and the crank 72, by virtue of its articulation, can move backwardly beyond the double cam 66 without effects on the main shaft 49. As soon as the double cam 66 has been passed, the crank 72 is returned by the spring 74 to a position adapted to engage the double cam 66 when the auxiliary shaft 70 is turned again (clockwise in Figure 12, which refers to this step of operation).

If the motorized loading means are used, the gearmotor 67 is actuated and acts with its crank 69 on the double cam 66, causing the rotation of the main shaft 49 about its own axis (counterclockwise in Figure 9, which shows in detail this step of operation) until the locking cam 80 is engaged by the locking lever 81.

The rotation of the main shaft 49 about its own axis 49a, caused by the manually-actuated loading means 44 or by the motorized loading means 45, loads the springs 55 and 63, since said rotation can occur only if the linkages 50 and 57 are elongated, since the opening-closing lever 7 is locked by the engagement of the double lever 75.

When the main shaft 49 has traced a rotation arc that is such that the locking lever 81 engages the locking cam 80, by means of the connecting levers 77a, 77b it disengages the double lever 75 from the opening-closing lever 7, which by being free to rotate about its own axis 7a and being subjected to the force of the spring 55 rapidly assumes the second position, closing the disconnector, as shown in particular in Figures 2 and 5. It should be noted that the closure of the disconnector may cause, by means of a connection between optional sensors for detecting this position and the gearmotor 67, the stopping of said gearmotor 67 used in the step for loading the springs 55 and 63.

Figure 4 illustrates the situation at the moment of maximum loading of the springs 55 and 63, just before the release of the opening-closing lever 7 by the double lever 75. In order to show this situation, the connecting levers 77a, 77b have been shown artificially disengaged from the first crank 48 of the main shaft 49.

In the closed position of the disconnector, shown in Figure 5, the spring 55 is unloaded, except for assembly preloading, while the spring 63 is loaded and the main shaft 49 is locked, as regards rotation about its own axis 49a, due to the engagement of the locking lever 81 with the locking cam 80, as shown in particular in Figure 6.

When the disconnector is to be opened, one acts manually or mechanically by means of the lever 83 or by means of the actuator 84 on the locking lever 81, so as to disengage it from the locking cam 80, as shown in Figure 7.

This disengagement causes the immediate rotation of the main shaft 49 about its own axis 49a due to the action of the spring 63 loaded earlier, counterclockwise in Figures 7 and 8, which refer to this step of operation. The rotation of the main shaft 49 in the opposite direction with respect to the direction that loaded the springs 55 and 63 also turns the opening-closing lever 7 about the axis 7a, causing the transfer from the second position to the first position, i.e., the consequent opening of the disconnector.

It should be noted that in this step, the main shaft 49 acts on the opening-closing lever 7 by means of the linkage 50, which by being subjected to compression, and since the spring 55 is unloaded except for assembly preloading, behaves like a substantially rigid body.

At this point, the device is ready for the new opening-closing cycle of the disconnector.

It should be noted that the closing and opening motion of the disconnector, with the device according to the invention, is produced by the release of previously loaded springs that act by compression. Thanks to this fact it is possible to achieve high reliability in the opening and closing of the disconnector as well as high speed in performing these operations, which considerably reduces the wear of the components, since it prevents the possibility of generating electric arcs during closure and limits the persistence time of electric arcs between the spark-gap electrodes 9a, 10a and 9b, 10b during opening.

Thanks to this fact and to the simplicity and reliability of the individual mechanisms that are used, with the device according to the invention it is possible to reduce or even eliminate the need for maintenance interventions.

In practice it has been observed that the device according to the invention fully achieves the intended aim and objects, since it ensures opening and closing speeds of the disconnector that significantly reduce the damage and wear of the disconnector during these operations and is capable of ensuring high reliability even with reduced maintenance interventions.

The device thus conceived is susceptible of numerous modifications and variations, all of which are within the scope of the appended claims; all the details may further be replaced with other technically equivalent elements.

In practice, the materials used, as well as the dimensions, may be any according to requirements and to the state of the art.

The disclosures in Italian Patent Application No. MI2003A002310 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for actuating on-load disconnectors for power lines, particularly for railroad power lines, comprising a moving element (41) that is associable with a moving electric contact (5) of the disconnector to be operated, said moving element (41) being movable from a first position to a second position, which correspond to the open and closed positions of the disconnector or vice versa, comprising:
-- first elastic means (42), which are connected to said moving element (41) and are adapted to act on said moving element (41) in order to transfer it from said first position to said second position;
-- second elastic means (43), which are connected to said moving element (41) and are adapted to act on said moving element (41) in order to transfer it from said second position to said first position;
-- means (44,45) for loading said elastic means (42,43) such that said first elastic means (42) and said second elastic means (43) are loaded simultaneously by said loading means (44,45); and
-- means (46,47) for retaining said moving element (41) in said first position and in said second position in contrast with the action of said elastic means (42,43), which are being loaded or are already loaded;
said retention means (46,47) being deactivatable in order to allow said moving element (41) to pass from said first position to said second position and vice versa by virtue of the elastic reaction of said elastic means (42,43), said retention means comprising a first retention means (46) that retain said moving element (41) in said first position when said first and second elastic means (42,43) are loaded by said loading means (44,45) and that are selectively deactivatable to move said moving element (41) from said first position to said second position and release said first elastic means (42) to an unloaded state while said second elastic means (43) remains loaded, and said retention means comprising a second retention means (47) that retain said moving element (41) in said second position when said second elastic means (43) is loaded and that are selectively deactivatable to move said moving element (41) from said second position back to said first position and release said second elastic means (43) to an unloaded state, wherein the device is then ready for a new opening-closing cycle with said loading means being again ready to simultaneously load said first and second elastic means (42,43).

2. The device according to claim 1, **characterized in that** said moving element (41) is constituted by an opening-closing lever (7), which is pivoted by means of one of its portions to a supporting structure (2) about a main axis (7a); said opening-closing lever (7) being connected, by way of one of its portions, to a first crank (48) of a main shaft (49) that can rotate about its own axis (49a), which is substantially parallel to said main axis (7a); said opening-closing lever (7) being connected to said first crank (48) by way of a first linkage (50) whose length can be increased in contrast with said first elastic means (42); said loading means (44,45) being connected to said main shaft (49) in order to turn it through an arc of preset breadth, in the direction of rotation that is adapted to cause the transfer of said opening-closing lever (7) from said first position to said second position; said first retention means (46) engaging said opening-closing lever (7) in order to retain it in said first position during the rotation of said main shaft (49) about its own axis (49a) in said direction of rotation, with consequent elongation of said first linkage (50); said second elastic means (43) elastically contrasting the rotation of said main shaft (49) about its own axis (49a) in said direction of rotation; said second retention means (47) engaging said main shaft (49) in order to lock it rotationally at the end of its rotation in said direction of rotation.

3. The device according to one or more of the preceding claims, **characterized in that** said first elastic means (42) are constituted by a helical spring (55), which is fitted on said first linkage (50) so that it can compress axially when said first linkage (50) is elongated.

4. The device according to claim 3, **characterized in that** said second elastic means (43) are arranged in a second linkage (57) whose length can be increased and which connects a second crank (58) of said main shaft (49) to said supporting structure (2).

5. The device according to claim 4, **characterized in that** said first linkage (50) whose length can be increased and said second linkage (57) whose length can be increased are arranged substantially side by side and parallel to each other.

6. The device according to claim 5, **characterized in that** said second elastic means (43) are constituted by a helical spring (63), which is fitted on said second linkage (57) so that it can compress axially when said second linkage (57) is elongated.

7. The device according to one or more of the preceding claims, **characterized in that** said first retention means (46) are connected to said main shaft (49) in order to disengage from said opening-closing lever (7) when a preset arc of rotation of said main shaft (49) in said direction of rotation is reached.

8. The device according to one or more of the preceding claims, **characterized in that** said loading means (44,45) are actuated manually.

9. The device according to one or more of the preceding claims, **characterized in that** said loading means (44,45) are motorized.

10. The device according to one or more of the preceding claims, **characterized in that** said supporting structure (2) comprises a box-like structure that supports said opening-closing lever (7) and accommodates said main shaft (49), said elastic means (42,43), said loading means (44,45) and said retention means (46,47).

## Patentansprüche

1. Eine Vorrichtung zur Betätigung von Lasttrennschaltern für Stromversorgungsleitungen, insbesondere für Bahnstromversorgung, umfassend ein bewegliches Element (41), das mit einem beweglichen elektrischen Kontakt (5) des zu bedienenden Trennschalters assoziierbar ist, wobei das bewegliche Element (41) von einer ersten Position zu einer zweiten Position bewegbar ist, die den geöffneten und geschlossenen Positionen des Trennschalters oder umgekehrt entsprechen, umfassend:
-- erste elastische Mittel (42), die mit dem beweglichen Element (41) verbunden sind und zum Einwirken auf das bewegliche Element (41) angepasst sind, um es von der ersten Position in die zweite Position zu transferieren;
-- zweite elastische Mittel (43), die mit dem beweglichen Element (41) verbunden sind und zum Einwirken auf das bewegliche Element (41) angepasst ist, um es von der zweiten Position in die erste Position zu transferieren;
-- Mittel (44, 45) zum Spannen der elastischen Mittel (42, 43) in einer Weise, dass die ersten elastischen Mittel (42) und die zweiten elastischen Mittel (43) von den Spannmitteln (44, 45) gleichzeitig gespannt werden; und
-- Mittel (46, 47) zum Halten des beweglichen Elements (41) in der ersten Position und in der zweiten Position durch den Einfluss der elastischen Mittel (42, 43), die geladen werden oder bereits geladen sind;
wobei die Haltemittel (46, 47) deaktivierbar sind, um dem beweglichen Element (41) zu ermöglichen, von der ersten Position in die zweite Position aufgrund der elastischen Reaktion der elastischen Mittel (42, 43) und umgekehrt zu gelangen, wobei die elastischen Haltemittel ein erstes Haltemittel (46) umfassen, das das bewegliche Element (41) in der ersten Position hält, wenn die ersten und zweiten elastischen Mittel (42, 43) von den Spannmitteln (44, 45) gespannt sind und die selektiv deaktivierbar sind, um das bewegliche Element (41) von der ersten in die zweite Position zu bewegen und das erste elastische Mittel (42) in einen ungespannten Zustand freizugeben, während das zweite elastische Mittel (43) gespannt bleibt, und wobei die Haltemittel ein zweites Haltemittel (17) umfassen, die ds bewegliche Element (41) die zweiten Position halten, wenn das zweite elastische Mittel (43) gespannt ist und die selektiv deaktivierbar sind, um das bewegliche Element (41) von der zweiten Position zurück in die erste Position zu bewegen und die zweiten elastischen Mittel (43) in einen ungespannten Zustand zu bringen, wobei die Vorrichtung dann für einen neuen Öffnungs-/Schließungszyklus bereit ist, wobei die Spannmittel wieder zum gleichzeitigen Spannen der ersten und zweiten elastischen Mittel (42, 43) bereit sind.

2. Die Vorrichtung gemäß Anspruch 1, **dadurch gekenneichnet, dass** das bewegliche Element (41) durch einen Öffner/Schließer-Hebel (7) gebildet ist, der mit Hilfe von einem seiner Teilbereiche an einer Stützkonstruktion (2) drehbar um eine Hauptachse (7a) gelagert ist; wobei der Öffner/Schließer-bTebel (7) mit Hilfe von einem seiner Teilbereiche mit einer ersten Kurbel (48) einer Hauptwelle (49) verbunden ist, die um ihre eigene Achse (49a), die im Wesentlichen zur Hauptachse (7a) parallel ist, drehbar ist; wobei der Öffner/Schließer-Hebel (7) mit Hilfe eines ersten Gestänges (50), dessen Länge im Gegensatz zu den ersten elastischen Mitteln (42) zunehmen kann, mit einer ersten Kurbel (48) verbunden ist; wobei die Spannmittel (44, 45) mit der Hauptwelle (49) verbunden sind, um sie in einem Bogen voreingestellter Breite in der Drehrichtung drehen, die angepasst ist, um den Transfer des Öffner/Schließer-Hebels (7) von der ersten Position in die zweite Position zu verursachen; wobei die ersten Haltemittel (46) den Öffner/Schließer-Hebel (7) angreifen, um ihn während der Drehung der Hauptwelle (49) um ihre eigene Achse (49a) in der Drehrichtung in der ersten Position zu halten, mit konsequenter Dehnung des ersten Gestänges (50); wobei die zweiten elastischen Mittel (43) der Drehung der Hauptwelle (49) um ihre eigene Achse (49a) in der Drehrichtung elastisch entgegenwirken; wobei die zweiten Haltemittel (47) die Hauptwelle (49) angreifen, um sie am Ende ihrer Drehung in der Drehrichtung drehend zu verriegeln.

3. Die Vorrichtung gemäß einem oder mehreren der vorhergehenden Ansprüche, **dadurch gekennzeichnet, dass** die ersten elastischen Mittel (42) von einer Schraubenfeder (55) gebildet sind, die an dem erstem Gestänge (50) angebracht ist, damit sie axial zusammendrückbar ist, wenn das erste Gestänge (50) gestreckt wird.

4. Die Vorrichtung gemäß Anspruch 3, **dadurch gekennzeichnet, dass** die zweiten elastischen Mittel (43) in einem zweiten Gestänge (57) angeordnet sind, dessen Länge zunehmen kann und das eine zweite Kurbel (58) der Hauptwelle (49) mit der Stützkonstruktion (2) verbindet.

5. Die Vorrichtung gemäß gemäß Anspruch 4, **dadurch gekennzeichnet, dass** das erste Gestänge (50), dessen Länge zunehmen kann, und das zweite Gestänge (57), dessen Länge zunehmen kann, im Wesentlichen nebeneinander und zueinander parallel angeordnet sind.

6. Die Vorrichtung gemäß gemäß Anspruch 5, **dadurch gekennzeichnet, dass** die zweiten elastischen Mittel (43) von einer Schraubenfeder (63) gebildet sind, die an dem zweitem Gestänge (57) angebracht sind, damit sie axial zusammendrückbar ist, wenn das zweite Gestänge (57) gestreckt wird.

7. Die Vorrichtung gemäß einem oder mehreren der vorhergehenden Ansprüche, **dadurch gekennzeichnet, dass** die ersten Haltemittel (46) mit der Hauptwelle (49) verbunden sind, um sich von dem Öffner/Schließer-Hebel (7) zu lösen, wenn ein voreingestellter Drehbogen der Hauptwelle (49) in der Drehrichtung erreicht ist.

8. Die Vorrichtung gemäß einem oder mehreren der vorhergehenden Ansprüche, **dadurch gekennzeichnet, dass** die Spannmittel (44, 45) manuell betätigt sind.

9. Die Vorrichtung gemäß einem oder mehreren der vorhergehenden Ansprüche, **dadurch gekennzeichnet, dass** die Spannmittel (44, 45) motorisiert sind.

10. Die Vorrichtung gemäß einem oder mehreren der vorhergehenden Ansprüche, **dadurch gekennzeichnet, dass** die Stützkonstruktion (2) eine kastenähnliche Konstruktion umfasst, die den Öffner/Schließer-Hebel (7) stützt und die Hauptwelle (49), die elastischen Mittel (42, 43), die Spannmittel (44, 45) und die Haltemittel (46, 47) aufnimmt.

## Revendications

1. Dispositif pour l'actionnement de sectionneurs en charge pour lignes électriques, en particulier pour lignes électriques de chemin de fer, comprenant un élément mobile (41) qui peut être associé à un contact électrique mobile (5) du sectionneur à actionner, ledit élément mobile (41) pouvant être déplacé d'une première position à une deuxième position, qui correspondent aux positions ouverte et fermée du sectionneur ou vice-versa, comprenant:
- des premiers moyens élastiques (42) qui sont reliés audit élément mobile (41) et qui sont aptes à agir sur ledit élément mobile (41) afin de le transférer de ladite première position à ladite deuxième position;
- des deuxièmes moyens élastiques (43) qui sont reliés audit élément mobile (41) et qui sont aptes à agir sur ledit élément mobile (41) afin de le transférer de ladite deuxième position à ladite première position;
- des moyens (44, 45) de chargement desdits moyens élastiques (42, 43) tels que ledits premiers moyens élastiques (42) et lesdits deuxièmes moyens élastiques (43) sont chargés simultanément par lesdits moyens de chargement (44, 45); et
- des moyens (46, 47) de retenue dudit élément mobile (41) dans ladite première position et dans ladite deuxième position en contraste avec l'action desdits moyens élastiques (42, 43) qui sont en charge ou qui sont déjà chargés;
lesdits moyens de retenue (46, 47) pouvant être désactivés afin de permettre audit élément mobile (41) de passer de ladite première position à ladite deuxième position et vice-versa grâce à la réaction élastique desdits moyens élastiques (42, 43), lesdits moyens de retenue comprenant des premiers moyens de retenue (46) qui retiennent ledit élément mobile (41) dans ladite première position lorsque lesdits premiers et deuxièmes moyens élastiques (42, 43) sont chargés par lesdits moyens de chargement (44, 45) et qui peuvent être désactivés sélectivement pour déplacer ledit élément mobile (41) de ladite première position à ladite deuxième position et pour relâcher lesdits premiers éléments élastiques (42) dans un état déchargé alors que lesdits deuxièmes moyens élastiques (43) restent chargés, et lesdits moyens de retenue comprenant des deuxièmes moyens de retenue (47) qui retiennent ledit élément mobile (41) dans ladite deuxième position lorsque lesdits deuxièmes moyens élastiques (43) sont chargés et qui peuvent être désactivés sélectivement pour faire revenir ledit élément mobile (41) de ladite deuxième position à ladite première position et pour relâcher lesdits deuxièmes éléments élastiques (43) dans un état déchargé, dans lequel le dispositif est alors prêt pour un nouveau cycle d'ouverture/fermeture avec lesdits moyens de chargement prêts à nouveau pour charger simultanément lesdits premiers et deuxièmes moyens élastiques (42, 43).

2. Dispositif selon la revendication 1, **caractérisé en ce que** ledit élément mobile (41) est constitué par un levier d'ouverture/fermeture (7) qui est articulé au moyen d'une de ses parties à une structure de support (2) autour d'un axe principal (7a); ledit levier d'ouverture/fernaeture (7) étant relié, au moyen de l'une de ses parties, à une première manivelle (48) d'un arbre principal (49) qui peut tourner autour de son propre axe (49a), qui est sensiblement parallèle audit axe principal (7a); ledit levier d'ouverture/fermeture (7) étant relié à ladite première manivelle (48) au moyen d'une première bielle (50) dont la longueur peut être augmentée en contraste avec lesdits premiers moyens élastiques (42); lesdits moyens de chargement (44, 45) étant reliés audit arbre principal (49) afin d'opérer sa rotation selon un arc d'amplitude prédéfinie, dans le sens de rotation apte à provoquer le transfert dudit levier d'ouverture/fermeture (7) de ladite première position à ladite deuxième position; lesdits premiers moyens de retenue (46) engageant ledit levier d'ouverture/fermeture (7) afin de le retenir dans ladite première position lors de la rotation dudit arbre principal (49) autour de son propre axe (49a) dans ledit sens de rotation, avec l'élongation conséquente de ladite première bielle (50); lesdits deuxièmes moyens élastiques (43) contrastant de façon élastique la rotation dudit arbre principal (49) autour de son propre axe (49a) dans ledit sens de rotation; lesdits deuxièmes moyens de retenue (47) engageant ledit arbre principal (49) afin de bloquer sa rotation à la fin de sa rotation dans ledit sens de rotation.

3. Dispositif selon une ou plusieurs des revendications précédentes, **caractérisé en ce que** lesdits premiers moyens élastiques (42) sont constitues par un ressort hélicoïdal (55), qui est monté sur ladite première bielle (50) de sorte à pouvoir se compresser axialement lorsque ladite première bielle (50) est allongée.

4. Dispositif selon la revendication 3, **caractérisé en ce que** lesdits deuxièmes moyens élastiques (43) sont agencés dans une deuxième bielle (57) dont la longueur peut être augmentée et qui relie une deuxième manivelle (58) dudit arbre principale (49) à ladite structure de support (2).

5. Dispositif selon la revendication 4, **caractérisé en ce que** ladite première bielle (50) dont la longueur peut être augmentée et ladite deuxième bielle (57) dont la longueur peut être augmentée sont agencées sensiblement l'une à coté de l'autre et parallèles entre elles.

6. Dispositif selon la revendication 5, **caractérisé en ce que** lesdits deuxièmes moyens élastiques (43) sont constitués par un ressort hélicoïdal (63), qui est monté sur ladite deuxième bielle (57) de sorte à pouvoir se compresser axialement lorsque ladite deuxième bielle (50) est allongée.

7. Dispositif selon une ou plusieurs des revendications précédentes, **caractérisé en ce que** lesdits premiers moyens de retenue (46) sont reliés audit arbre principal (49) afin de se désengager dudit levier d'ouverture/fermeture (7) lorsque un arc de rotation prédéfini dudit arbre principal (49) dans ledit sens de rotation est atteint.

8. Dispositif selon une ou plusieurs des revendications précédentes, **caractérisé en ce que** lesdits moyens de chargement (44, 45) sont actionnés manuellement.

9. Dispositif selon une ou plusieurs des revendications précédentes, **caractérisé en ce que** lesdits moyens de chargement (44, 45) sont motorisés.

10. Dispositif selon une ou plusieurs des revendications précédentes, **caractérisé en ce que** ladite structure de support (2) comprend une structure en forme de boîtier qui supporte ledit levier d'ouverture/fermeture (7) et qui loge ledit arbre principale (49), lesdits moyens élastiques (42,43), lesdits moyens de chargement (44, 45) et lesdits moyens de retenue (46, 47).
